# EUROPÄISCHE PATENTANMELDUNG

(11) **EP 2 287 690 A1**
(43) Veröffentlichungstag der Anmeldung: **23.02.2011**
(21) Anmeldenummer: 09010628.7
(22) Anmeldetag: 18.08.2009
(51) Int. Cl.: G05B 19/418, H04L 12/24, H04L 12/40

(54) **Filterkomponente für Meldungen in einer industriellen Automatisierungsanordnung**

(71) Anmelder: SIEMENS AKTIENGESELLSCHAFT, 80333 München (DE)
(72) Erfinder: Lange, Rainer, 76139 Karlsruhe (DE); Thurau, Oliver, 67117 Limburgerhof (DE)

(57) **Zusammenfassung**

Die Erfindung betrifft eine Filterkomponente (FK) für Meldungen (UM) in einer industriellen Automatisierungsanordnung, wobei die Meldungen (UM) von einer Automatisierungskomponente (AK) erzeugt und zu zumindest einem Client (CL) übertragen werden, und wobei die erzeugten Meldungen (UM) von der Filterkomponente (FK) hinsichtlich zumindest eines Kriteriums überprüft werden. Dabei ist die Filterkomponente (FK) als eine von dem Client (CL) und von der Automatisierungskomponente (AK) unabhängige und für Meldungen (UM) verschiedenen Typs konfigurierbare Software-Komponente ausgebildet, die auf einer Hardware-Komponente (HW) abläuft, wobei nur solche Meldungen (FM) zu dem Client (CL) übertragen werden, die dem Kriterium entsprechen.

## Beschreibung

Die Erfindung betrifft eine Filterkomponente für Meldungen in einer industriellen Automatisierungsanordnung gemäß dem Oberbegriff des Patentanspruchs 1.

Ein wichtiges Entwurfsmerkmal in Automatisierungsanordnungen und -systemen ist die Benachrichtigung sog. Clients über Ereignisse in der Peripherie (Event Notification), die von den unterlagerten Geräten oder Komponenten ausgesendet werden. Dies kann z.B. ein Alarm oder ein anderes Ereignis sein, das einen Ausfall oder Statuswechsel einer Automatisierungskomponente meldet. Diese Ereignisse kommen zu einem beliebigen und auch unvorhergesehenen Zeitpunkt vor, so dass auch die die Ereignisse beschreibenden Meldungen unkontrolliert auftreten können.

Die Softwarekomponenten von Automatisierungsanordnungen basieren meistens auf Client-Server-Architekturen. Das Client-Server-Modell beschreibt eine Möglichkeit, Aufgaben und Dienstleistungen innerhalb eines Netzwerkes zu verteilen. Die Aufgaben werden von Programmen erledigt, die in Clients und Server unterteilt werden. Als Server sollen im hier beschriebenen Kontext alle diejenigen Automatisierungskomponenten gelten, die Meldungen über Ereignisse, Zustände etc. erzeugen. Der Client kann auf Wunsch eine Aufgabe vom Server anfordern. Der Server, der sich auf einem beliebigen anderen Rechner im Netzwerk befindet, beantwortet die Anforderung des Clients direkt. Eine solche Anforderung kann im hier geschilderten Kontext die Aufforderung umfassen, bestimmte Ereignisse zukünftig mittels Meldungen anderen Komponenten, also Clients, zu melden. Die gezielte Fragestellung des Clients kommt aus dessen derzeitigen Kontext, z.B. soll in einem Bedien-Client (sog. HMI-Gerät; HMI = Human-Machine-Interface) eine Graphik mit einem Ausschnitt eines Anlagenabbildes angezeigt werden. Für unvorhergesehene Ereignisse, z.B. ein Ausfall einer Steuerungskomponente in einem anderen Anlagenteil, muss der zuständige Bedien-Client informiert werden. Dem Server ist der Kontext des Bedien-Client zu diesem Zeitpunkt nicht bekannt. Es kann nicht unterschieden werden, ob genau dieser Bedien-Client für dieses Ereignis zuständig ist. Deshalb werden vom Server oftmals viel zu viele Ereignisse an den Bedien-Client gesendet, der sie analysieren und verwerfen muss, falls sie in seinem aktuellen Bezug nicht benötigt werden. Insbesondere bei größeren Datenübertragungsmengen ist dieser Ansatz sehr problematisch. Um die übertragene Informationsmenge zu minimieren, muss sie bereits auf der Serverseite reduziert, d.h. ausgefiltert, werden.

Bisher werden dazu in den Softwareprogrammen der Server bzw. Automatisierungskomponenten einzelne proprietäre Lösungen programmiert. Die derzeitigen Realisierungen sind aber inflexibel und haben zudem einen hohen Entwicklungskostenaufwand, da sie in der Regel für jeden Event-Typ speziell entwickelt werden und die Filterung integraler Bestandteil der Meldungs-Erzeugung der Server bzw. Automatisierungskomponenten ist. Daher ist die Wiederverwendbarkeit des die Filterkomponenten realisierenden Programmcodes nur sehr eingeschränkt oder oft überhaupt nicht möglich. Eine Filterung auf Serverseite wird daher trotz der damit einhergehenden Eindämmung des Meldungsaufkommens meist vermieden, u.a., weil bei einer Änderung der Client-seitigen Erfordernisse die Filterkomponenten geändert (umprogrammiert) werden, was zum Einen ohnehin aufwendig ist, und zum anderen Eingriffe in die Server-seitige Programmierung vermieden werden sollen, weil beispielsweise nach der Änderung der Programmierung und Neu-Compilierung des Programmcodes oft ein erneuter Systemtest der geänderten Automatisierungskomponente(n) erfolgen muss etc..

Es ist somit eine Aufgabe der vorliegenden Erfindung, eine möglichst universell einsetzbare Filterkomponente vorzuschlagen, die flexibel auf die aktuellen Erfordernisse eines Clients und auf verschieden Typen von Servern einstellbar ist.

Die Lösung der Aufgabe umfasst den Entwurf einer generischen (wiederverwendbaren) Filterkomponente für eine an einen Standard angelehnte Filterbeschreibungssprache (z.B. SQL, XPath o.ä.) zum Zweck der Filterung einer Vielzahl unterschiedlicher Meldungen ("Events").

Die Lösung der Aufgabe sieht insbesondere eine Filterkomponente für Meldungen in einer industriellen Automatisierungsanordnung vor, wobei die Meldungen von einer Automatisierungskomponente erzeugt und zu zumindest einem Client übertragen werden, wobei die erzeugten Meldungen von der Filterkomponente hinsichtlich zumindest eines Kriteriums überprüft werden, und wobei nur solche Meldungen zu dem zumindest einen Client übertragen werden, die dem zumindest einen Kriterium entsprechen. Dabei ist die Filterkomponente als eine von dem Client und von der Automatisierungskomponente unabhängige und für Meldungen verschiedenen Typs und Datenmodelle konfigurierbare Software-Komponente ausgebildet, die auf einer Hardware-Komponente, bevorzugt der die Meldungen erzeugenden Automatisierungskomponente oder einer externen Einrichtung, abläuft. Eine solche Filterkomponente kann beispielsweise als fertige Laufzeit-Komponente (z.B. als sog. DLL - Dynamic Link Library) erstellt und gestestet werden und danach auf einer Vielzahl von jeweils als Server agierenden Automatisierungskomponenten eingesetzt werden. Dadurch ist der Client in der Lage, dynamisch und zur Laufzeit seinen aktuellen Bezug den Servern mitteilen zu können, damit der Server die aktuell nicht benötigten Daten bzw. die damit verbundenen Meldungen durch vorheriges Analysieren (Filtern) der Information gar nicht erst überträgt. Dies vermindert die Belastung der Kommunikationswegen und aller beteiligten Komponenten und erhöht somit die Verfügbarkeit (Performance).

Vorteilhafte Ausgestaltungen der erfindungsgemäßen Filterkomponente sind in den abhängigen Patentansprüchen angegeben.

Durch eine Filterung der Meldungen mittels der Filterkomponente seitens der Automatisierungskomponente kann insbesondere die Auslastung eines Datennetzwerkes durch unnötig versendete Meldungen vermieden werden. Die Ausführung der Filterkomponente als ein externes Gerät, beispielsweise als netzgestützter Dienst, bietet hingegen den Vorteil, dass keine Ressourcen, beispielsweise Rechenzeit und Speicher, einer Automatisierungskomponente beansprucht werden.

Es ist von Vorteil, wenn die Filterkomponente möglichst "generisch" aufgebaut ist, also für verschiedene Zwecke und verschiedene Automatisierungskomponenten bzw. Server und auch für Clients (im Falle einer Client-seitigen Filterung) wiederverwendet werden kann. Dies wird vorteilhaft dadurch erreicht, dass die Filterkomponente zum Zugriff durch den zumindest einen Client mittels einer standardisierten Filtersprache eingerichtet ist. Vorteile in der Bedienung und der Wiederverwendbarkeit ergeben sich zudem, wenn die Filtersprache semantische Elemente der Abfragesprache SQL ("Structured Query Language") oder XPath ("XML Path Language") aufweist bzw. eine Untermenge dieser darstellt. Im Gegenzug ist vorteilhafter Weise die Filterkomponente zum Empfang und zur Verarbeitung zumindest eines Kriteriums eingerichtet, welches von dem zumindest einen Client vorgegeben ist. Dadurch kann ein oder jeder Client die Filterkomponente frei konfigurieren. Dabei umfasst die Filterkomponente auch vorteilhaft eine Parser-Komponente zur Prüfung des Kriteriums oder der Kriterien und zur Erstellung oder Änderung eines diesen Kriterium oder den Kriterien entsprechenden Filterbaums. Der Filterbaum kann dabei entweder durch Speichermittel, beispielsweise RAM oder Festplatte, der Filterkomponente selbst gespeichert werden, oder aber in einen externen Datenspeicher, auf den die Filterkomponente Zugriff hat.

Vorteilhaft umfasst die Filterkomponente weiterhin zumindest eine Schnittstelle zum Abruf oder zum Empfang der Meldungen von der Automatisierungskomponente. In den Fällen, in denen die Filterkomponente auf derselben Hardware-Komponente installiert ist, die auch die Automatisierungskomponente umfasst, handelt es sich dabei um eine geräte-interne Schnittstelle. Vorteilhaft nimmt die Filterkomponente den Abruf der Meldungen mittels einer standardisierten Abfragesprache vor, wodurch weiter die Wiederverwendbarkeit der Filterkomponente für andere Einsatzzwecke erleichtert wird. Vorteilhaft umfasst auch diese Abfragesprache semantische Elemente oder eine Untermenge der Abfragesprachen SQL oder XPath, wodurch eine Programmierung und Bedienung vereinfacht wird.

Ausführungsbeispiele der erfindungsgemäßen Filterkomponente werden nachfolgend anhand der Zeichnungen erläutert.

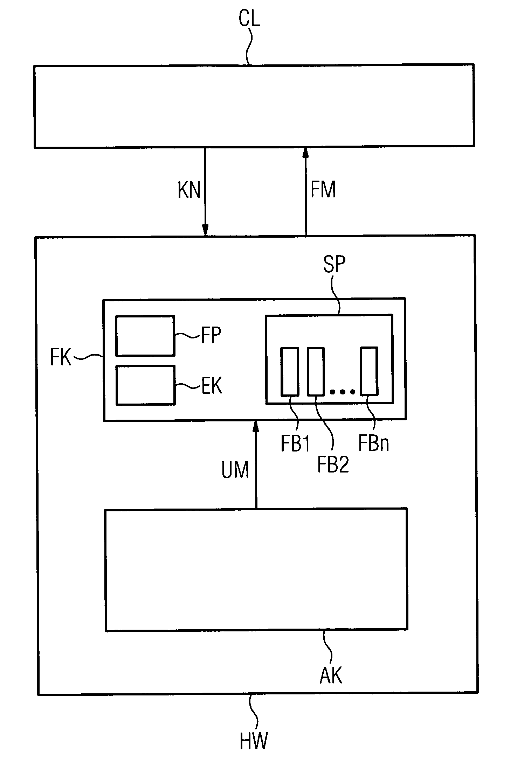

Dabei zeigt die einzige Figur in schematischer Darstellung eine Hardwarekomponente, die eine Automatisierungskomponente und eine Filterkomponente umfasst, sowie einen Client.

In der Figur ist eine der möglichen Varianten einer Anordnung aus einer Automatisierungskomponente AK, einem Client CL und einer Filterkomponente FK dargestellt. Dabei sind die Automatisierungskomponente AK und die Filterkomponente FK vorteilhaft gemeinsam auf einer einzigen Hardwarekomponente HW installiert, wodurch die bereits vorstehend beschriebenen Vorteile realisiert werden können. In alternativen und hier nicht dargestellten Ausführungsformen der Erfindung kann die Filterkomponente FK jedoch auch auf einer weiteren, separaten Hardwarekomponente installiert sein oder auch Teil einer weiteren Hardwarekomponente sein, die auch den Client CL umfasst. Ebenso ist eine Kaskadierung mehrerer Filterkomponenten FK möglich.

Bei der Automatisierungskomponente AK handelt es sich im vorliegenden Ausführungsbeispiel um einen Controller, welcher einen Automatisierungsvorgang steuert und dazu mit einer hier nicht dargestellten Peripherie, die Sensoren und Aktoren umfasst, verbunden ist. Als ein einfaches Ausführungsbeispiel sei im Folgenden angenommen, dass mittels der hier dargestellten Anordnung ein Temperaturwert eines Prozesses, der seinerseits durch die Automatisierungskomponente AK gesteuert wird, überwacht werden soll. Dazu ist der Client CL als ein Beobachtungs- und Bediengerät, ein sog. HMI-Gerät, ausgeführt. Weiterhin sei angenommen, dass an dem Client CL immer dann ein Alarm ausgelöst werden soll, wenn der betrachtete Temperaturwert eine vorher festgelegte Grenztemperatur überschreitet.

Im vorliegenden Ausführungsbeispiel ist die Automatisierungskomponente AK derart ausgeführt, dass diese regelmäßig, beispielsweise einmal in jeder Sekunde, eine Meldung mit dem laufend gemessenen Temperaturwert an die Filterkomponente FK übermittelt. Die daraus resultierenden Meldungen UM (ungefilterte Meldungen) werden durch die Filterkomponente FK gefiltert, so dass nur solche Meldungen FM (gefilterte Meldungen) an den Client CL weiter übermittelt werden, die das Kriterium erfüllen, die also den Grenzwert überschreiten.

Beim Start der aus der Automatisierungskomponente AK, der Filterkomponente FK und dem Client CL bestehenden Automatisierungsanordnung übermittelt der Client CL eine Konfigurierungs-Nachricht KN zu der Filterkomponente FK. Die Konfigurierungs-Nachricht umfasst den derzeitigen Kontext des Clients CL in einer Filterbeschreibung; im vorliegenden Ausführungsbeispiel beschreibt dieser Kontext, dass Meldungen über den betrachteten Temperaturwert gewünscht sind, sofern dieser Temperaturwert einen definierten Grenzwert überschreitet. Die Filterbeschreibung, die mit der Konfigurierungs-Nachricht KN übermittelt wird, legt somit ein Filterkriterium fest; dieses liegt dabei in einer der Sprache SQL ähnlichen Form vor. Eine Parser-Komponente FP ("Filter-Parser") der Filterkomponente FK analysiert die empfangene Filterbeschreibung, extrahiert zumindest ein Filter-Kriterium und erstellt anhand dessen einen Filter-Suchbaum FB1, ..., FBn und speichert diesen in dem Speicher SP. In analoger Weise ist auch eine Änderung bereits bestehender Filter-Suchbäume FB1, ..., FBn möglich. Zudem können auch für jeden Client mehrere Filter-Suchbäume FB1, FB2, ..., FBn angelegt werden.

Die Filterkomponente FK sendet nun ihrerseits eine (nicht dargestellte) Anforderungsmeldung zu der Automatisierungskomponente, wodurch diese aufgefordert wird, in einem regelmäßigen Zeitraster, hier: einmal in jeder Sekunde, den entsprechenden Temperaturwert zu ermitteln und an die Filterkomponente FK zu übertragen.

Durch die Filterbeschreibung in einer Beschreibungssprache, die an SQL angelehnt ist oder dieser entspricht, können in alternativen Ausführungsformen zur Filterung auch Daten aus einer externen Datenquelle oder Datenbank abgerufen werden, wobei die Filterbeschreibung unverändert oder nahezu unverändert zur Abfrage der Datenbank verwendet werden kann.

Die von der Filterkomponente FK empfangenen ungefilterten Meldungen UM werden durch die Evaluierungs-Komponente EK jeweils in einen Suchbaum übersetzt und mit einem oder allen Filter-Suchbäumen FB1, ..., FBn verglichen. Im Falle eines positiven Vergleichs, also in den Fällen, in denen die jeweils betrachtete Meldung ein bzw. das Filterkriterium des Clients erfüllt, wird die betreffende Meldung UM als eine gefilterte Meldung FM an den Client CL weitergeleitet; in allen anderen Fällen wird die betreffende Meldung UM verworfen. In einer alternativen Ausführungsform kann die Filterkomponente FK auch lediglich das Ergebnis liefern, ob das durch die Meldung beschriebene Ereignis den Filterbedingungen genügt (true) oder nicht (false).

## Patentansprüche

1. Filterkomponente (FK) für Meldungen (UM) in einer industriellen Automatisierungsanordnung,
wobei die Meldungen (UM) von einer Automatisierungskomponente (AK) erzeugt und zu zumindest einem Client (CL) übertragen werden, und
wobei die erzeugten Meldungen (UM) von der Filterkomponente (FK) hinsichtlich zumindest eines Kriteriums überprüft werden,
**dadurch gekennzeichnet,**
**dass** die Filterkomponente (FK) als eine von dem Client (CL) und von der Automatisierungskomponente (AK) unabhängige und für Meldungen (UM) verschiedenen Typs konfigurierbare Software-Komponente ausgebildet ist, die auf einer Hardware-Komponente (HW) abläuft,
wobei nur solche Meldungen (FM) zu dem zumindest einen Client (CL) übertragen werden, die dem zumindest einen Kriterium entsprechen.

2. Filterkomponente (FK) nach Patentanspruch 1,
**dadurch gekennzeichnet,**
**dass** die Hardware-Komponente (HW) die die Meldungen (UM) erzeugende Automatisierungskomponente (AK) ist.

3. Filterkomponente (FK) nach Patentanspruch 1,
**dadurch gekennzeichnet,**
**dass** die Hardware-Komponente (HW) ein von dem Client (CL) und der die Meldungen (UM) erzeugende Automatisierungskomponente (AK) unabhängiges Datenverarbeitungsgerät ist.

4. Filterkomponente (FK) nach einem der vorhergehenden Patentansprüche,
**dadurch gekennzeichnet,**
**dass** die Filterkomponente (FK) zum Konfigurierung durch den zumindest einen Client (CL) mittels einer standardisierten Filtersprache eingerichtet ist.

5. Filterkomponente (FK) nach Patentanspruch 4,
**dadurch gekennzeichnet,**
**dass** die Filtersprache semantische Elemente der Abfragesprachen SQL oder XPath aufweist.

6. Filterkomponente (FK) nach einem der vorhergehenden Patentansprüche,
**dadurch gekennzeichnet,**
**dass** die Filterkomponente (FK) zum Empfang und zur Verarbeitung zumindest eines Kriteriums eingerichtet ist, welches von dem zumindest einen Client (CL) vorgegeben ist.

7. Filterkomponente (FK) nach Patentanspruch 6,
**dadurch gekennzeichnet,**
**dass** die Filterkomponente (FK) eine Parser-komponente (FP) zur Prüfung des Kriteriums und zur Erstellung oder Änderung eines diesem Kriterium entsprechenden Filterausdrucks und zur Erstellung oder Erweiterung eines Filterbaums (FB1, FB2, ..., FBn) mit diesem Filterausdruck eingerichtet ist.

8. Filterkomponente (FK) nach Patentanspruch 7,
**dadurch gekennzeichnet,**
**dass** die Filterkomponente (FK) Speichermittel (SP) zur Speicherung des Filterbaums (FB1, FB2, ..., FBn) aufweist oder Zugriff auf ein solches Speichermittel (SP) aufweist.

9. Filterkomponente (FK) nach einem der vorhergehenden Patentansprüche,
**dadurch gekennzeichnet,**
**dass** die Filterkomponente (FK) eine Schnittstelle zum Abruf oder zum Empfang der Meldungen (UM) von der Automatisierungskomponente (AK) aufweist.

10. Filterkomponente (FK) nach Patentanspruch 9,
**dadurch gekennzeichnet,**
**dass** die Filterkomponente (FK) zum Abruf der Meldungen (UM) mittels einer standardisierten Abfragesprache eingerichtet ist.

11. Filterkomponente (FK) nach Patentanspruch 10,
**dadurch gekennzeichnet,**
**dass** die Abfragesprache semantische Elemente der Abfragesprachen SQL oder XPath umfasst.
